# EUROPEAN PATENT SPECIFICATION

(11) **EP 0 539 226 B1**
(45) Date of publication and mention of the grant of the patent: **07.01.1998**
(21) Application number: 92309743.0
(22) Date of filing: 23.10.1992
(51) Int. Cl.: G02B 26/10, G02B 5/32

(54) **Laser beam optical scanner**
Optischer Abtaster mit einem Laserstrahl
Dispositif de balayage optique à faisceau laser

(30) Priority: 25.10.1991 JP 279800/91
(43) Date of publication of application: 28.04.1993
(73) Proprietor: FUJITSU LIMITED, Kawasaki-shi, Kanagawa 211 (JP)
(72) Inventor: Kayashima, Shigeo, c/o Fujitsu Limited, Kawasaki-shi, Kanagawa 211 (JP); Hasegawa, Shinya, c/o Fujitsu Limited, Kawasaki-shi, Kanagawa 211 (JP); Maeda, Satoshi, c/o Fujitsu Limited, Kawasaki-shi, Kanagawa 211 (JP); Aritake, Hirokazu, c/o Fujitsu Limited, Kawasaki-shi, Kanagawa 211 (JP)
(74) Representative: Fenlon, Christine Lesley

(56) References cited:
- EP-A- 0 334 631
- US-A- 4 245 882
- PATENT ABSTRACTS OF JAPAN vol. 15, no. 466 (P-1280)26 November 1991 & JP-A-3 198 020 ( MATSUSHITA ) 29 August 1991
- PATENT ABSTRACTS OF JAPAN vol. 12, no. 99 (E-594)31 March 1988 & JP-A-62 230 074 ( MATSUSHITA ) 8 October 1987
- IBM TECHNICAL DISCLOSURE BULLETIN. vol. 29, no. 8, January 1987, NEW YORK US pages 3673 - 3674 'Straight-Line, Two-Dimensional Holographic Scanner'
- PATENT ABSTRACTS OF JAPAN vol. 8, no. 31 (P-253)(1468) 9 February 1984 & JP-A-58 184 925 ( HITACHI ) 28 October 1983
- PATENT ABSTRACTS OF JAPAN vol. 8, no. 92 (P-271)(1529) 27 April 1984 & JP-A-59 007 333 ( RICOH ) 14 January 1984
- PATENT ABSTRACTS OF JAPAN vol. 13, no. 448 (P-942)9 October 1989 & JP-A-1 172 902 ( MATSUSHITA ) 7 July 1989

## Description

The present invention relates to an optical scanner and, more particularly, to an optical scanner using a laser beam for scanning.

A prior art laser scanner incorporated into office automation equipment, such as a laser printer or laser facsimile terminal equipment, a laser plotter, a laser inspection device or the like, comprises, in combination, a polygonal rotating mirror and an f-θ lens. This prior art laser scanner, however, has disadvantages in that the polygonal rotating mirror must be fabricated with high accuracy and the f-θ lens, consisting of a plurality of lenses, is expensive, and hence it is difficult to reduce the cost of the laser scanner. On the other hand, since replicas of a hologram can be produced by mass production, a hologram scanner can be manufactured at a relatively low cost.

Prior art hologram scanners are known from JP-A-3198020, JP-A-59007333, EP-A-0334631 and IBM technical disclosure bulletin, vol. 29, no. 8, p. 3673-4. Background information on diffraction holograms and gratings can be found in JP-A-62230074, JP-A-1172902 and JP-A-58184925.

According to one aspect of the present invention there is provided an optical scanner, including means for directing a laser beam produced by the scanner to be incident at a point on a receiving surface that is moved in a predetermined feed direction during use of the scanner, which means include a support structure carrying first and second holographic diffraction gratings spaced apart from one another so that the said laser beam is incident upon, and diffracted by, the first grating and is subsequently incident upon, and diffracted by, the second grating, the said support structure being rotatable to cause the point of incidence of the laser beam on the receiving surface to scan thereacross in a predetermined scanning direction, each of the first and second gratings being such that a ratio λ/d, where λ is the wavelength of the said laser beam (5) and d is the grating constant of the grating concerned, is in the range from 0.4 to 1.1, the said laser beam being directed so as to be incident on the first grating at a location where the direction of polarization of the incident laser beam remains substantially perpendicular to the grating direction as the support structure rotates, and there being included in the scanner a fixed plate carrying a further holographic diffraction grating, on which the laser beam is incident after diffraction by the said second grating and by which the laser beam is diffracted so as to converge on the said receiving surface in a direction perpendicular to the said feed direction. The said support structure may comprise a transparent plate having the first and second holographic diffraction gratings formed respectively on opposite surfaces thereof.

According to another aspect of the present invention there is provided an optical scanner, including means for directing a laser beam produced by the scanner to be incident at a point on a receiving surface that is moved in a predetermined feed direction during use of the scanner, which means include a support structure carrying a first holographic diffraction grating and a mirror spaced apart from one another so that the said laser beam is incident upon, and diffracted by, the grating and is subsequently incident upon the mirror and is reflected back thereby onto the grating so as to be diffracted thereby a second time, the support structure being rotatable to cause the point of incidence of the laser beam on the receiving surface to scan thereacross in a predetermined scanning direction, the grating being such that a ratio λ/d, where λ is the wavelength of the said laser beam and d is the grating constant of the grating, is in the range from 0.4 to 1.1, the said laser beam being directed so as to be incident on the said grating at a location where the direction of polarization of the incident laser beam remains substantially perpendicular to the grating direction as the support structure rotates, and there being included in the scanner a fixed plate carrying a further holographic diffraction grating, on which the laser beam is incident after the second diffraction by the first grating and by which the laser beam is diffracted so as to converge on the said receiving surface in a direction perpendicular to the said feed direction. The said support structure in this case may comprise a transparent plate having the first holographic diffraction grating and the said mirror formed respectively on opposite surfaces thereof.

The said fixed plate in each case may be a transparent plate.

Reference will now be made, by way of example, to the accompanying drawings, in which:
Figure 1 shows a perspective view of a holographic scanner proposed previously in Japanese Patent Application No. Hei 3-62961 by the present applicant, corresponding to EP-A-0 532 760, published on 24.03.1993 and constituting prior art within the meaning of Art. 54(3) EPC;
Figures 2(a) and 2(b) show diagrammatic views for use in explaining an arrangement for compensating for the positional variation of scanning lines attributable to the parallelism of the base plate of a rotary hologram plate;
Figures 3(a) and 3(b) show respectively a graph illustrating the variation of the holographic diffraction efficiency of a surface relief hologram, replicas of which can be easily produced, and a sectional view of the hologram;
Figure 4(a) shows a perspective view showing the disposition of a rotary hologram plate and a coherent light source L, in which the light source L is disposed so that the direction of polarisation of a beam emitted by the light source L is parallel to the grating direction, and Figure 4(b) is a perspective view showing the disposition of a rotary hologram plate and a coherent light source L, in which the direction of polarisation of a beam emitted by the light source L is perpendicular to the grating direction;
Figure 5 shows a diagrammatic view for use in explaining a prior art hologram forming method;
Figure 6 shows a diagrammatic view for use in explaining a first method of forming a hologram for use in an optical scanner embodying the present invention;
Figures 7(a) and 7(b) show respective side views of a prior art hologram and a hologram formed by the method of Figure 6;
Figure 8 shows a diagrammatic view for use in explaining a second method of forming a hologram for use in an optical scanner embodying the present invention;
Figure 9 shows a diagrammatic view for use in explaining a third method of forming a hologram for use in an optical scanner embodying the present invention;
Figure 10 shows a diagrammatic view for use in explaining a fourth method of forming a hologram for use in an optical scanner embodying the present invention;
Figures 11(a) and 11(b) show views for use in explaining the functions of a hologram formed by the hologram forming method of Fig. 10 in comparison with those of a prior art hologram plate; and
Figures 12(a) and 12(b) show diagrammatic views for use in explaining a fifth method of forming a hologram for use in an optical scanner embodying the present invention.

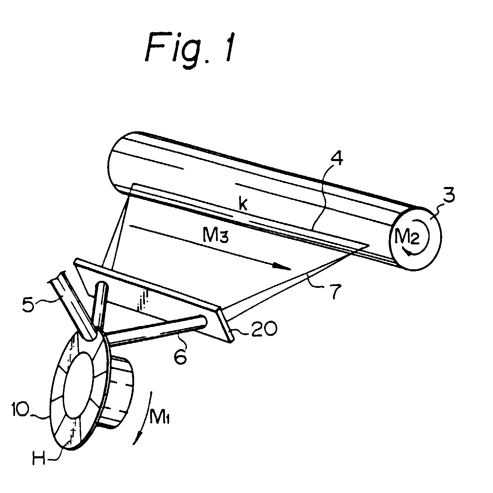

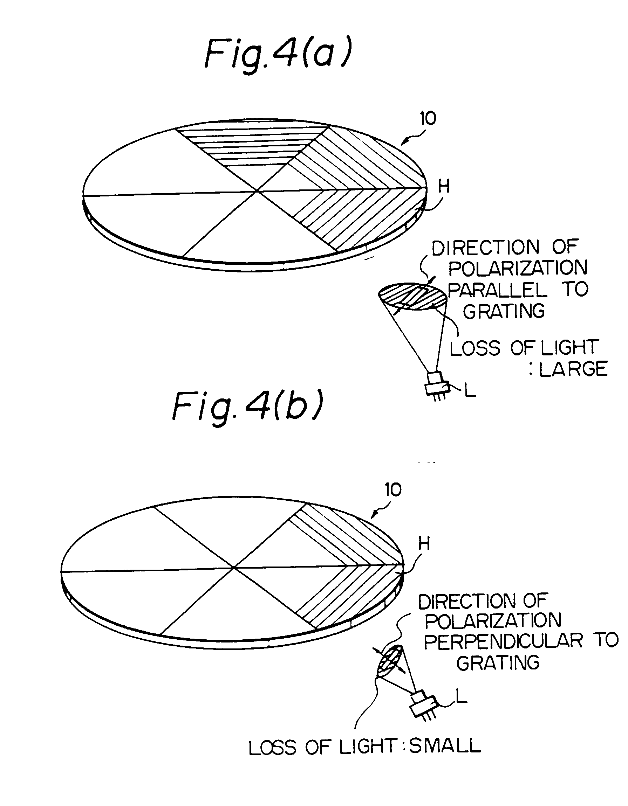

Referring to Fig. 1 showing a hologram scanner proposed previously by the owner of the present patent application in Japanese Patent Application No. Hei 3-62961, there are shown a photoconductive drum 3, an image forming surface 4 formed over the circumference of the photoconductive drum 3, an incident laser beam portion 5, diffracted beam portions 6 and 7, a rotary hologram plate 10 carrying a plurality of holograms H (Fig. 4) and capable of being rotated at a high rotating speed, and a fixed hologram plate 20. The arrows M1, M2 and M3 indicate the direction of rotation of the rotary hologram plate 10, the direction of rotation of the photoconductive drum 3 and the scanning direction of the laser beam, respectively. The incident laser beam portion 5 from a semiconductor laser, not shown, falls on the rotary hologram plate 10 rotating at a high rotating speed (M1 = 8,000 - 10,000 RPM) in the direction of the arrow M1 and is diffracted thereby so as to cause scanning of the resulting beam portion 6. The diffracted beam portion 6 leaving the rotary hologram plate 10 is converted by the fixed hologram 20 into the beam portion 7, which converges onto the image forming surface 4 of the photoconductive drum 3 rotating in the direction of the arrow M2, in such a manner as to produce constant-speed linear scanning on the surface 4 in the direction of the arrow M3. The number of dots in a unit length is about 157 dots/cm (400 dots/inch).

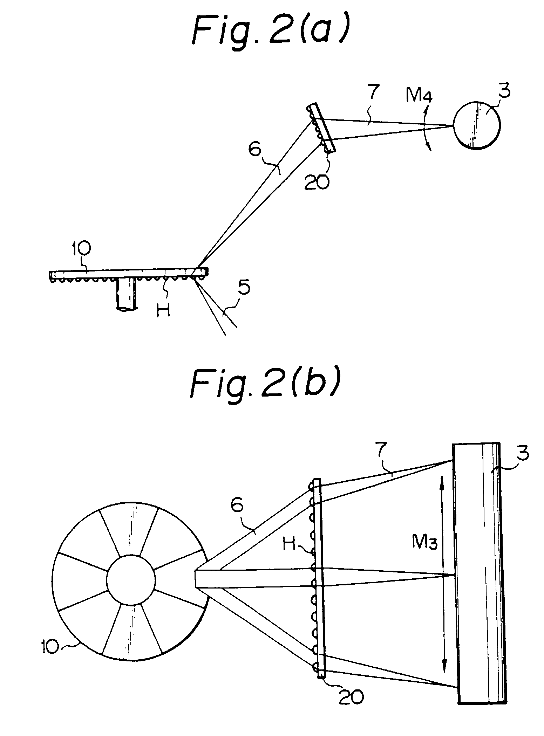

Figs. 2(a) and 2(b) show an arrangement for compensating for the positional variation of scanning lines, attributable to the parallelism of the base plate of a rotary hologram plate 10. Shown in Figs. 2(a) and 2(b) are a photoconductive drum 3, an incident beam portion 5, diffracted beam portions 6 and 7, a rotary hologram plate 10, a fixed hologram plate 20 and a hologram H. The arrows M3 and M4 indicate respectively the scanning direction and the feed direction of the drum 3. It will be seen that the light beam incident on the rotary hologram plate 10 is caused to converge onto the light-receiving surface of the drum 3 in a direction perpendicular to the feed direction, indicated by the arrow M4, at the point of incidence thereon. The ratio λ/d, where λ is the wavelength of the laser beam and d is the grating constant of the holographic diffraction grating, is in the range of 1.4 to 1.5. Refer to Japanese Patent Application No. Hei 3-62961 for further details of the arrangement for compensating for the positional variation of the scanning line.

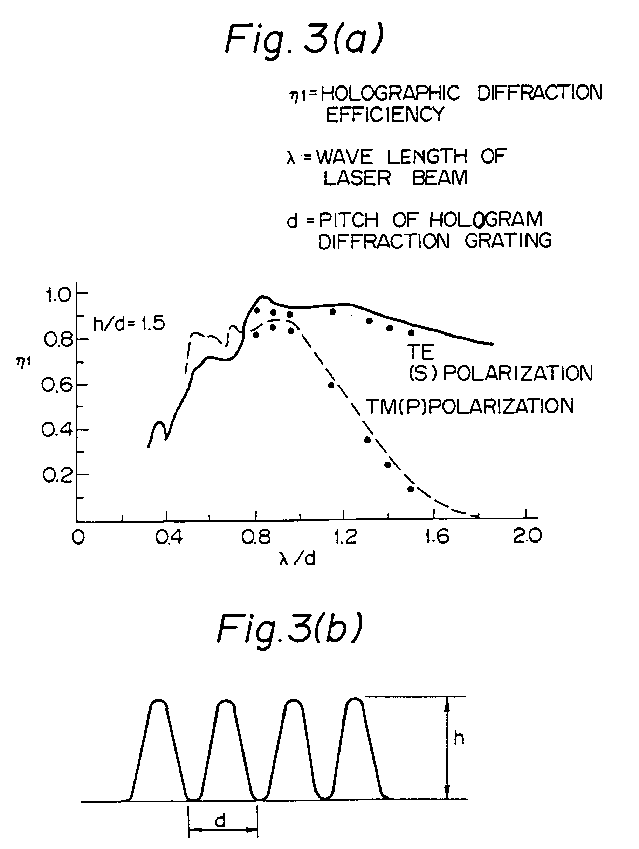

Fig. 3(a) is a graph showing the variation of holographic diffraction efficiency with the ratio λ/d when a surface relief hologram is used (APPLIED OPTICS Vol.23, No. 14, 2303 - 2310 (1984)). A replica of a surface relief hologram can be easily produced. As is obvious from Fig. 3(a), the holographic diffraction efficiency is dependent on the ratio λ/d. The mode of variation of the holographic diffraction efficiency with the ratio λ/d for what is called S-polarized light in which the direction of linear polarization is parallel to the grating direction and that for what is called P-polarized light, in which the direction of linear polarization is perpendicular to the grating direction, are different from each other, and S-polarized light must be used for high diffraction efficiency when the ratio λ/d is in the range of 1.4 to 1.5. Fig. 3(b) shows a section of a hologram, in which d is the grating constant of the holographic diffraction grating and h is the height of the same.

Fig. 4(a) shows a case such that the direction of polarization of a semiconductor laser L, i.e. a light source, is parallel to the grating direction of a grating and Fig. 4(b) shows a case such that the direction of polarization of a semiconductor laser, i.e. a light source, is perpendicular to the grating direction of a grating. In Figs. 4(a) and 4(b), indicated at 10 is a rotary hologram plate, at L is a semiconductor laser (i.e. a light source), and at H is a hologram. When a laser beam is projected so as to converge with respect to the feed direction, loss in light intensity is large as shown in Fig. 4(a) because the size of the aperture of the semiconductor laser L along the feed direction is small. In the state shown in Fig. 4(b), loss in light intensity is reduced significantly when the direction of polarization is parallel to the feed direction. However, since the laser beam is P-polarized light having a direction of polarization perpendicular to the grating direction of the grating in the latter case, the diffraction efficiency is very low, which is obvious from Fig. 3(a).

Such a problem may be solved by placing a half-wave plate (λ/2 plate) behind the semiconductor laser L to turn the plane of polarization of the laser beam through 90°, but this increases the cost of the optical scanner. In some cases, it is difficult to separate a stamper from the base plate, when producing replicas of a surface relief hologram, if the grating constant of the grating is small.

As stated above, the holographic diffraction efficiency of an optical scanner using a hologram is dependent on the ratio λ/d, where λ is the wavelength of a laser beam employed and d is the grating constant of a holographic diffraction grating employed, and the mode of variation of the holographic diffraction efficiency with the ratio λ/d for S-polarized light and that for P-polarized light are significantly different.

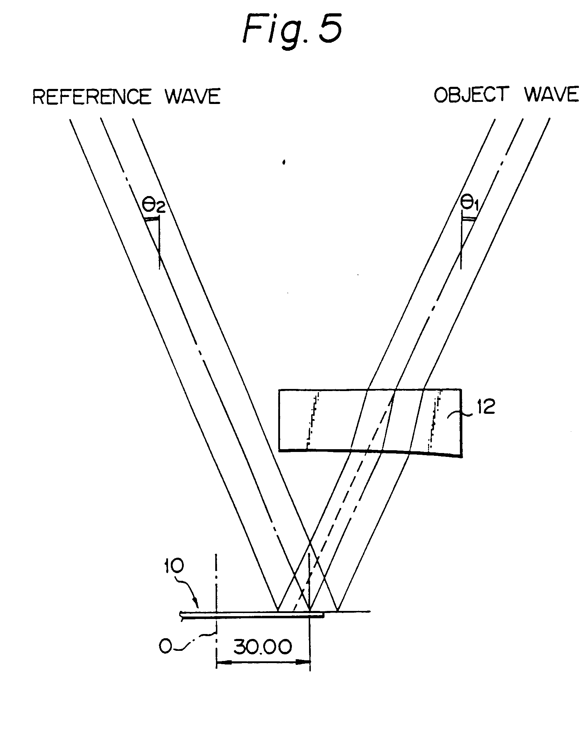

A known hologram forming method will be described with reference to Fig. 5. In Fig. 5, there are shown a rotary hologram plate 1O, a cylindrical lens 12 and an axis O of rotation of the rotary hologram plate 10. A beam that diverges only in the feed direction and a beam having a plane wavefront are used, respectively, as an object beam and a reference beam. The incident angles of the object beam and the reference beam are θ1 and θ2, respectively.

In this known hologram forming method, when, for example, θ1 = 24.76° and θ2 = 23.44°, forming wavelength λ1 = 441.6 nm, and reconstructing wavelength λ1 = 785.0 nm, λ/d = 1.4 . As is obvious from Fig. 3, the diffraction efficiency of the diffraction grating for P-polarized light is not very high under such conditions. The diffraction efficiency for P-polarized light can be improved when the ratio λ/d is reduced to a value of the order of 0.8.

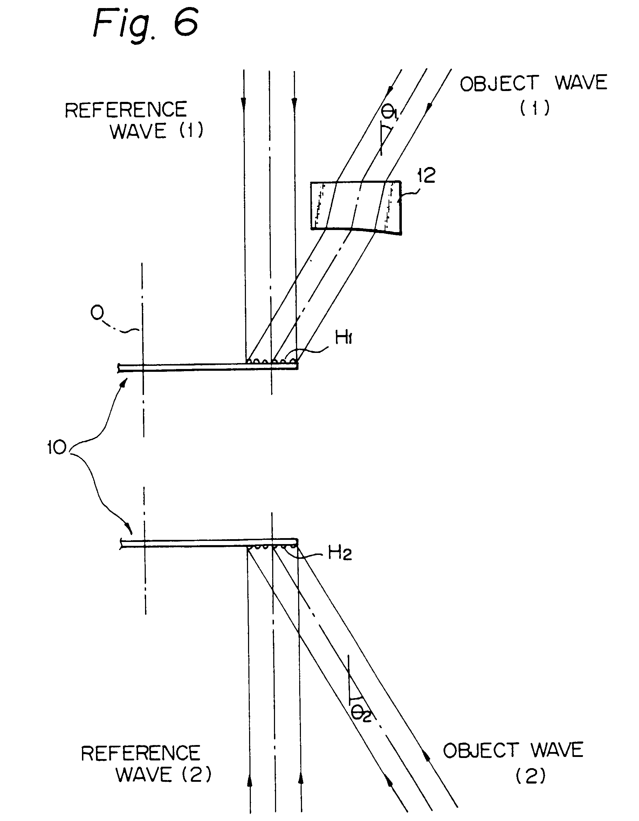

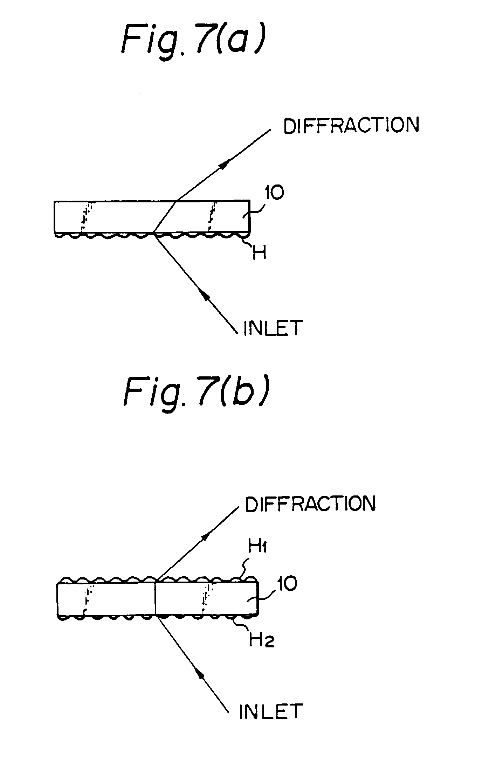

Fig. 6 illustrates a first hologram forming method, which is one of the effective means for the improvement of the diffraction efficiency for P-polarized light. In Fig. 6 there are shown a rotary hologram plate 10, a cylindrical lens 12, the axis O of rotation of the rotary hologram plate 10, and holograms H1 and H2. The two holograms H1 and H2 are equivalent to one prior art hologram. An interference fringe pattern forming the first hologram is formed on one surface of a transparent hologram base plate by using a beam having a plane wavefront and incident perpendicularly on the base plate (reference wave 1) and a beam which has been modified so that it has a non-planar wavefront and which is incident on the surface at an incident angle θ1 (object wave 1). An interference fringe pattern forming the second hologram is formed on the other surface of the transparent hologram plate by a beam having a plane wavefront and incident perpendicularly on the base plate (reference wave 2) and a beam which has been modified so that it has a non-planar wavefront and which is incident on the surface concerned at an incident angle θ2 different from the incident angle θ1 (object wave 2). The functions of the rotary hologram plate 10 provided with the two holograms, respectively on the opposite surfaces thereof, are equivalent to those of a prior art rotary hologram plate provided with one hologram H on one surface thereof as shown in Fig. 7(a). In Fig. 7(a), λ/d = 1.4 to 1.5, and η = 0.15.

When this rotary hologram base plate 10 is used, a laser beam incident on one surface of the base plate is diffracted by the second hologram H2, the laser beam is diffracted again by the first hologram H1 and emerges from the other surface of the base plate lO. Since the ratio λ/d with the first hologram H1 is 0.7, both the diffraction efficiencies for P-polarized light and S-polarized light are on substantially the same high level, which is obvious from Fig. 3. Since the ratio λ/d with the second hologram H2 is 0.7, the diffraction efficiencies of the second hologram H2 for P-polarized light and S-polarized light, similarly to those of the first hologram Hl, are on a high level. Thus, as shown in Fig. 7(b), the functions of the rotary hologram plate lO are equivalent to those of the prior art rotary hologram plate, and the rotary hologram plate lO is capable of diffracting P-polarized light at a high diffraction efficiency. Replicas of the rotary hologram plate 10 can be easily produced by mass production. In Fig. 7(b), λ/d = 0.75 and η = 0.8 for one hologram, and η = 0.64 for two holograms.

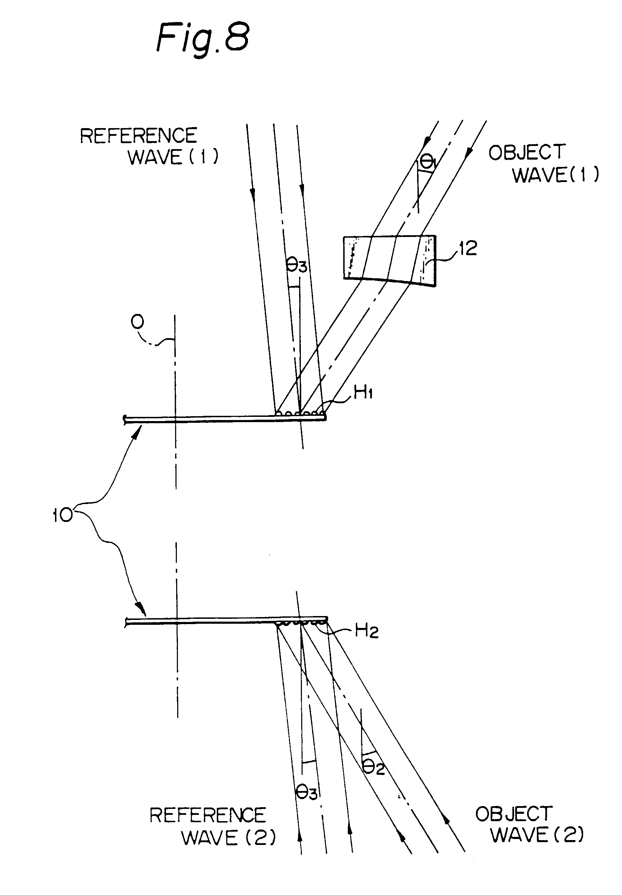

Fig. 8 illustrates a second hologram forming method, which is similar to that of Fig. 6 except that reference waves 1 and 2, which are beams having plane wavefronts, are incident on the surface of a base plate at the same incident angle θ3 in this second method. In this Fig. 8 method, the incident angle θ3 at which the reference waves 1 and 2 fall on the surface of the base plate can be changed to facilitate alignment of the components of the optical exposure system when forming a hologram.

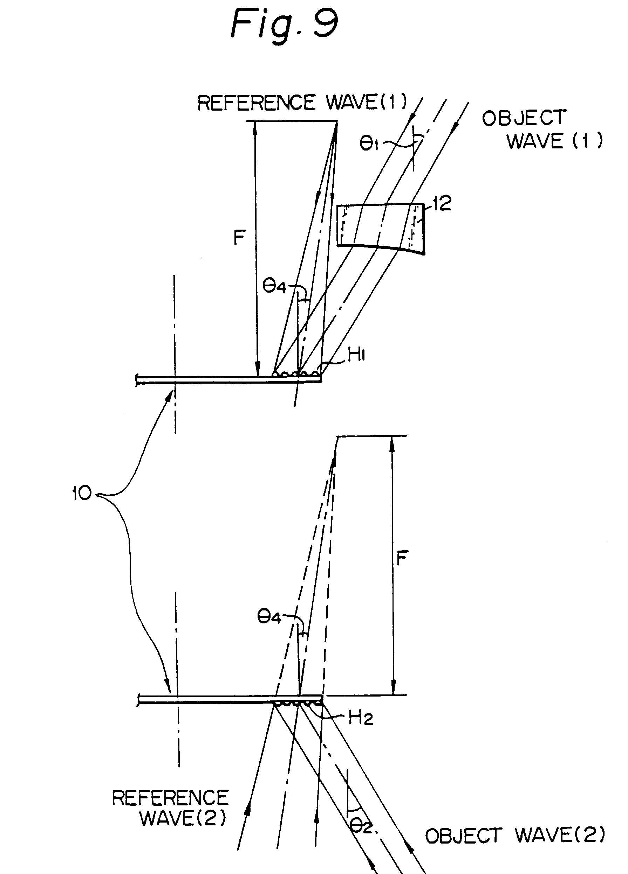

Fig. 9 illustrates a third hologram forming method. A reference wave 1 used in this embodiment is a divergent beam, having a spherical wavefront, which diverges from a focal point at a distance F from the upper surface of the base plate 10 and is incident thereon at an incident angle θ4, and a reference wave 2 is a convergent beam, having a spherical wavefront, which converges towards a focal point at the distance F from the said upper surface and is incident on the base plate 10 at the said incident angle θ4. In the method of Fig. 9, the distance F or the incident angle θ4 can be changed so as to facilitate alignment of the components of the optical exposure system.

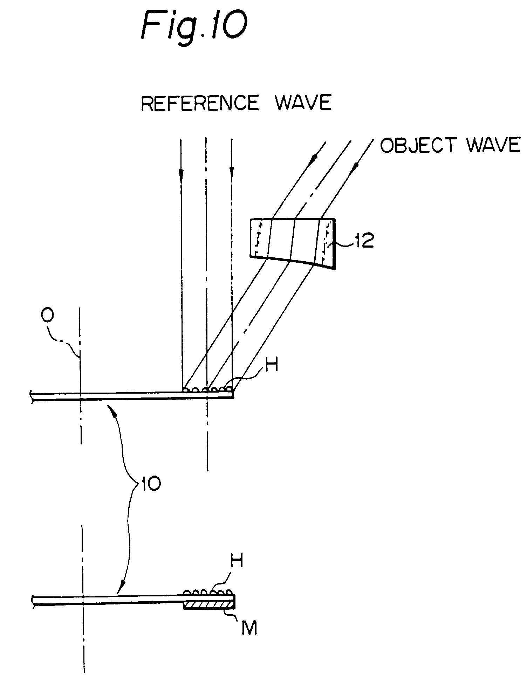

Fig. 10 illustrates a fourth hologram forming method, which is different from the foregoing embodiments. In the Fig. 10 method, an interference fringe pattern of a hologram H, which is similar to the first hologram H1 formed by the method of Fig. 6, is formed on one surface of a transparent base plate 10 by interference between a beam having a plane wavefront and incident perpendicularly on the surface of the base plate (reference wave) and a beam which has been modified so as to have a non-planar wavefront and which is incident on the surface of the base plate at an incident angle θ1. An aluminum film is deposited by evaporation on the other surface of the base plate to form a mirror M. Since the ratio λ/d with the hologram H of the rotary hologram thus formed is 0.7, the diffraction efficiency of the hologram H for P-polarized light is about equal to that for S-polarized light.

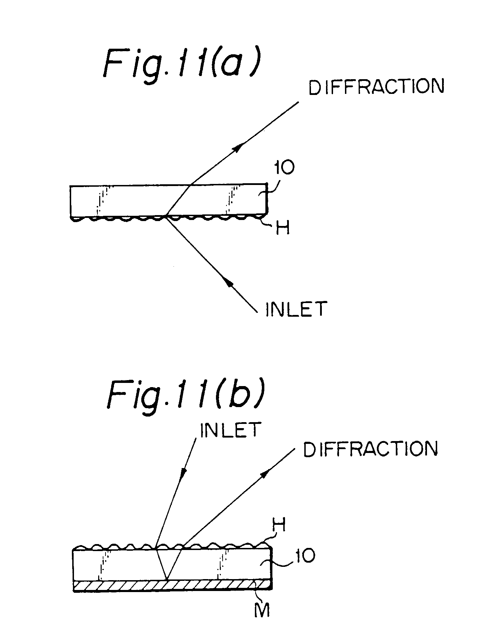

Figs. 11(a) and 11(b) are views for use in explaining the functions of the rotary hologram plate formed by the hologram forming method of Fig. 10 compared with those of a prior art rotary hologram plate. As shown in Fig. 11(b), since light diffracted by the hologram H formed on one of the surfaces of the base plate is reflected by the mirror M formed on the other surface of the base plate so as to be diffracted again by the hologram H, the ratio λ/d may be 0.7. Accordingly, the hologram H is capable of diffracting light with high diffraction efficiency.

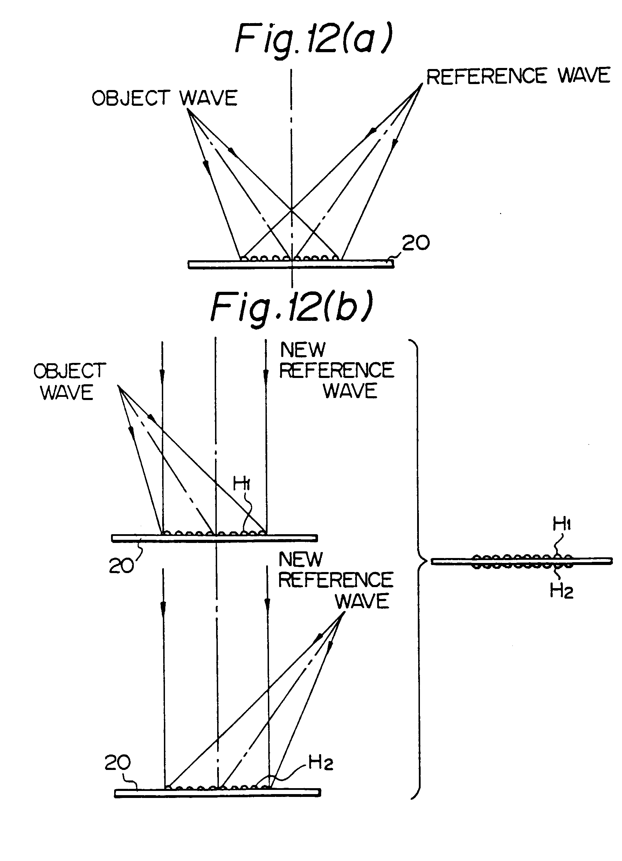

Figs. 12(a) and 12(b) illustrate a fifth hologram forming method. As shown in Fig. 12(a), when the fixed hologram plate 20 has a high spatial frequency, the base plate of the fixed hologram plate 20 has a significant length. Therefore, it is difficult, in some cases, to separate a stamper from the base plate when producing a replica of the fixed hologram plate 20. In such a case, a hologram similar to those formed by the methods in the foregoing embodiments is formed on the base plate by additionally using a new reference wave, such as a plane wavefront beam directed perpendicularly to the surface of the base plate, to reduce the ratio λ/d of the hologram and thereby enable the stamper to be more easily separated from the base plate.

As is apparent from the foregoing description, an embodiment of the present invention can be constructed so that so-called P-polarised light, as well as so-called S-polarised light, can be diffracted therein with high diffraction efficiency, enabling a high proportion of the laser light to reach the scanned light-receiving surface. Furthermore, since the optical scanner need not be provided with any λ/2 plate, the optical scanner can be manufactured at a relatively low cost. Still further, since the spatial frequency of the hologram employed by a scanner embodying the present invention can be approximately half that of a prior art hologram, the stamper can be more easily separated from the base plate when producing a replica of the hologram.

Although the above description refers to the or each hologram that is rotated as being formed on a transparent plate it should be noted that alternative forms of rotary support structure may be used for locating the two holograms, or the hologram and mirror, relative to one another and to other parts of the scanner.

## Claims

1. An optical scanner, including means for directing a laser beam (5) produced by the scanner to be incident at a point on a receiving surface (4) that is moved in a predetermined feed direction during use of the scanner, which means include a support structure (10) carrying first and second holographic diffraction gratings (H2, H1) spaced apart from one another so that the said laser beam (5) is incident upon, and diffracted by, the first grating (H2) and is subsequently incident upon, and diffracted by, the second grating (H1), the said support structure (10) being rotatable to cause the point of incidence of the laser beam (5) on the receiving surface (4) to scan thereacross in a predetermined scanning direction (M3), each of the first and second gratings (H2, H1) being such that a ratio λ/d, where λ is the wavelength of the said laser beam (5) and d is the grating constant of the grating (H2, H1) concerned, is in the range from 0.4 to 1.1, the said laser beam (5) being directed so as to be incident on the first grating (H2) at a location where the direction of polarization of the incident laser beam (5) remains substantially perpendicular to the grating direction as the support structure (10) rotates, and there being included in the scanner a fixed plate (20) carrying a further holographic diffraction grating, on which the laser beam is incident after diffraction by the said second grating (H1) and by which the laser beam is diffracted so as to converge on the said receiving surface (4) in a direction perpendicular to the said feed direction.

2. An optical scanner according to claim 1, wherein the said support structure comprises a transparent plate having the first and second holographic diffraction gratings (H2, H1) formed respectively on opposite surfaces thereof.

3. An optical scanner, including means for directing a laser beam (5) produced by the scanner to be incident at a point on a receiving surface (4) that is moved in a predetermined feed direction during use of the scanner, which means include a support structure (10) carrying a first holographic diffraction grating (H) and a mirror (M) spaced apart from one another so that the said laser beam (5) is incident upon, and diffracted by, the grating (H) and is subsequently incident upon the mirror (M) and is reflected back thereby onto the grating (H) so as to be diffracted thereby a second time, the support structure (10) being rotatable to cause the point of incidence of the laser beam (5) on the receiving surface (4) to scan thereacross in a predetermined scanning direction (M3), the grating (H) being such that a ratio λ/d, where λ is the wavelength of the said laser beam (5) and d is the grating constant of the grating (H), is in the range from 0.4 to 1.1, the said laser beam (5) being directed so as to be incident on the said grating (H) at a location where the direction of polarization of the incident laser beam (5) remains substantially perpendicular to the grating direction as the support structure (10) rotates, and there being included in the scanner a fixed plate (20) carrying a further holographic diffraction grating, on which the laser beam is incident after the second diffraction by the first grating (H) and by which the laser beam is diffracted so as to converge on the said receiving surface (4) in a direction perpendicular to the said feed direction.

4. An optical scanner according to claim 3, wherein the said support structure comprises a transparent plate having the said first holographic diffraction grating (H) and the said mirror (M) formed respectively on opposite surfaces thereof.

5. An optical scanner according to claim 1 or 2, wherein one of the said first and second holographic diffraction gratings (H2, H1) has been formed on one surface of the said support structure (10) by interference between a first light beam, having a plane wavefront and directed perpendicularly onto the said one surface, and a second light beam, which had been modified so that it had a non-planar wavefront and which was incident obliquely on the said one surface at a first angle (θ1), and the other of the said first and second holographic diffraction gratings (H2, H1) has been formed on a second surface of the said support structure (10) by interference between a third light beam, having a plane wavefront and directed perpendicularly onto the said second surface, and a fourth light beam which had been modified so that it had a non-planar wavefront and which was incident obliquely on the said second surface at a second angle (θ2), different from the said first angle (θ1).

6. An optical scanner according to claim 1 or 2, wherein one of the said first and second holographic diffraction gratings (H2, H1) has been formed on one surface of the said support structure (10) by interference between a first light beam, having a plane wavefront and incident obliquely on the said one surface at a first angle (θ3), and a second light beam which was incident obliquely on the said one surface at a second angle (θ1) and which had been modified so that it had a non-planar wavefront, and the other of the said first and second holographic diffraction gratings (H2, H1) has been formed on a second surface of the said support structure (10) by interference between a third light beam, having a plane wavefront and incident obliquely on the said second surface at the said first angle (θ3), and a fourth light beam which had been modified so that it had a non-planar wavefront and which was incident obliquely on the said second surface at a third angle (θ2).

7. An optical scanner according to claim 1 or 2, wherein one of the said first and second holographic diffraction gratings (H2, H1) has been formed on one surface of the said support structure (10) by interference between a first light beam, having a plane wavefront and incident obliquely on the said one surface at a first angle (θ3), and a second light beam which was incident obliquely on the said one surface at a second angle (θ1) and which had been modified so that it had a non-planar wavefront, and the other of the said first and second holographic diffraction gratings (H2,H1) has been formed on a second surface of the said support structure (10) by interference between a third light beam, having a plane wavefront and directed perpendicularly onto the said second surface, and a fourth light beam which had been modified so that it had a non-planar wavefront and which was incident obliquely on the said second surface at a third angle (θ2), different from the said second angle (θ1).

8. An optical scanner according to claim 1 or 2, wherein one of the said first and second holographic diffraction gratings (H2, H1) has been formed on one surface of the said support structure (10) by interference between a first light beam, which had a spherical wavefront and diverged from a point at a distance (F) from the said one surface and was incident obliquely thereon at a first angle (θ4), and a second light beam which had been modified so that it had a non-planar wavefront and which was incident obliquely on the said one surface at a second angle (θ1), and the other of the said first and second holographic diffraction gratings (H2, H1) has been formed on a second surface of the said support structure (10) by interference between a third light beam, which had a spherical wavefront and which converged towards a point at the said distance (F) from the said one surface and was incident obliquely on the said second surface at the said first angle (θ4), and a fourth light beam which was incident obliquely on the said second surface at a third angle (θ2), different from the second angle (θ1).

9. An optical scanner according to any preceding claim, wherein the said fixed plate (20) is a transparent plate.

## Patentansprüche

1. Ein optischer Scanner, enthaltend Mittel zum Richten eines durch den Scanner erzeugten Laserstrahls (5), um ihn bei einem Punkt auf einer empfangenden Oberfläche (4) einfallen zu lassen, die während einer Verwendung des Scanners in einer vorbestimmten Zufuhrrichtung bewegt wird, welche Mittel eine Tragstruktur (10) enthalten, die erste und zweite holographische Beugungsgitter (H2, H1) trägt, die voneinander beabstandet sind, so daß der Laserstrahl (5) auf das erste Gitter (H2) einfällt und durch dieses gebeugt wird und anschließend auf das zweite Gitter (H1) einfällt und durch dieses gebeugt wird, welche Tragstruktur (10) drehbar ist, um den Einfallspunkt des Laserstrahls (5) auf der empfangenden Oberfläche (4) in einer vorbestimmten Scanrichtung (M3) darüber scannen zu lassen, wobei jedes der ersten und zweiten Gitter (H2, H1) derart ist, daß ein Verhältnis λ/d, wo λ die Wellenlänge des Laserstrahls (5) ist und d die Gitterkonstante des betreffenden Gitters (H2, H1) ist, in dem Bereich von 0,4 bis 1,1 liegt, welcher Laserstrahl (5) so gerichtet ist, um auf das erste Gitter (H2) bei einer Stelle einzufallen, wo die Polarisationsrichtung des einfallenden Laserstrahls (5) im wesentlichen senkrecht zu der Gitterrichtung bleibt, während sich die Tragstruktur (10) dreht, und wobei in dem Scanner eine feste Platte (20) enthalten ist, die ein weiteres holographisches Beugungsgitter trägt, auf das der Laserstrahl nach Beugung durch das zweite Gitter (H1) einfällt und durch das der Laserstrahl gebeugt wird, um auf der empfangenden Oberfläche (4) in einer zu der Zufuhrrichtung senkrechten Richtung zu konvergieren.

2. Ein optischer Scanner nach Anspruch 1, bei dem die Tragstruktur eine transparente Platte mit den ersten und zweiten holographischen Beugungsgittern (H2, H1) aufweist, die jeweils auf deren gegenüberliegenden Oberflächen gebildet sind.

3. Ein optischer Scanner, enthaltend Mittel zum Richten eines durch den Scanner erzeugten Laserstrahls (5), um ihn bei einem Punkt auf einer empfangenden Oberfläche (4) einfallen zu lassen, die während einer Verwendung des Scanners in einer vorbestimmten Zufuhrrichtung bewegt wird, welche Mittel eine Tragstruktur (10) enthalten, die ein erstes holographisches Beugungsgitter (H) und einen Spiegel (M) trägt, die voneinander beabstandet sind, so daß der Laserstrahl (5) auf das Gitter (H) einfällt und durch dieses gebeugt wird und anschließend auf den Spiegel (M) einfällt und dadurch auf das Gitter (H) zurück reflektiert wird, um so dadurch ein zweites Mal gebeugt zu werden, welche Tragstruktur (10) drehbar ist, um den Einfallspunkt des Laserstrahls (5) auf der empfangenden Oberfläche (4) in einer vorbestimmten Scanrichtung (M3) darüber scannen zu lassen, welches Gitter (H) derart ist, daß ein Verhältnis λ/d, wo λ die Wellenlänge des Laserstrahls (5) ist und d die Gitterkonstante des Gitters (H) ist, in dem Bereich von 0,4 bis 1,1 liegt, welcher Laserstrahl (5) so gerichtet ist, um auf das Gitter (H) bei einer Stelle einzufallen, wo die Polarisationsrichtung des einfallenden Laserstrahls (5) im wesentlichen senkrecht zu der Gitterrichtung bleibt, während sich die Tragstruktur (10) dreht, und wobei in dem Scanner eine feste Platte (20) enthalten ist, die ein weiteres holographisches Beugungsgitter trägt, auf das der Laserstrahl nach der zweiten Beugung durch das erste Gitter (H) einfällt und durch das der Laserstrahl gebeugt wird, um so auf der empfangenden Oberfläche (4) in einer zu der Zufuhrrichtung senkrechten Richtung zu konvergieren.

4. Ein optischer Scanner nach Anspruch 3, bei dem die Tragstruktur eine transparente Platte mit dem ersten holographischen Beugungsgitter (H) und dem Spiegel (M) aufweist, die jeweils auf gegenüberliegenden Oberflächen davon gebildet sind.

5. Ein optischer Scanner nach Anspruch 1 oder 2, bei dem eines der ersten und zweiten holographischen Beugungsgitter (H2, H1) auf einer Oberfläche der Tragstruktur (10) gebildet worden ist durch Interferenz zwischen einem ersten Lichtstrahl, der eine ebene Wellenfront aufwies und senkrecht auf die eine Oberfläche gerichtet war, und einem zweiten Lichtstrahl, der so modifiziert worden war, daß er eine nicht ebene Wellenfront aufwies und welcher schräg auf die eine Oberfläche unter einem ersten Winkel (θ1) einfiel, und das andere der ersten und zweiten holographischen Beugungsgitter (H2, H1) auf einer zweiten Oberfläche der Tragstruktur (10) gebildet worden ist durch Interferenz zwischen einem dritten Lichtstrahl, der eine ebene Wellenfront aufwies und senkrecht auf die zweite Oberfläche gerichtet war, und einem vierten Lichtstrahl, der so modifiziert worden war, daß er eine nicht ebene Wellenfront aufwies und welcher schräg auf die zweite Oberfläche unter einem zweiten, von dem ersten Winkel (θ1) verschieden Winkel (θ2) einfiel.

6. Ein optischer Scanner nach Anspruch 1 oder 2, bei dem eines der ersten und zweiten holographischen Beugungsgitter (H2, H1) auf einer Oberfläche der Tragstruktur (10) gebildet worden ist durch Interferenz zwischen einem ersten Lichtstrahl, der eine ebene Wellenfront aufwies und schräg auf die eine Oberfläche unter einem ersten Winkel (θ3) einfiel, und einem zweiten Lichtstrahl, der schräg auf die eine Oberfläche unter einem zweiten Winkel (θ1) einfiel und der so modifiziert worden war, daß er eine nicht ebene Wellenfront aufwies, und das andere der ersten und zweiten holographischen Beugungsgitter (H2, H1) auf einer zweiten Oberfläche der Tragstruktur (10) gebildet worden ist durch Interferenz zwischen einem dritten Lichtstrahl, der eine ebene Wellenfront aufwies und schräg auf die zweite Oberfläche unter dem ersten Winkel (θ3) einfiel, und einem vierten Lichtstrahl, der so modifiziert worden war, daß er eine nicht ebene Wellenfront aufwies und welcher schräg auf die zweite Oberfläche unter einem dritten Winkel (θ2) einfiel.

7. Ein optischer Scanner nach Anspruch 1 oder 2, bei dem eines der ersten und zweiten holographischen Beugungsgitter (H2, H1) auf einer Oberfläche der Tragstruktur (10) gebildet worden ist durch Interferenz zwischen einem ersten Lichtstrahl, der eine ebene Wellenfront aufwies und schräg auf die eine Oberfläche unter einem ersten Winkel (θ3) einfiel, und einem zweiten Lichtstrahl, der schräg auf die eine Oberfläche unter einem zweiten Winkel (θ1) einfiel und welcher so modifiziert worden war, daß er eine nicht ebene Wellenfront aufwies, und das andere der ersten und zweiten holographischen Beugungsgitter (H2, H1) auf einer zweiten Oberfläche der Tragstruktur (10) gebildet worden ist durch Interferenz zwischen einem dritten Lichtstrahl, der eine ebene Wellenfront aufwies und senkrecht auf die zweite Oberfläche gerichtet war, und einem vierten Lichtstrahl, der so modifiziert worden war, daß er eine nicht ebene Wellenfront aufwies und welcher schräg auf die zweite Oberfläche unter einem dritten, von dem zweiten Winkel (θ1) verschiedenen Winkel (θ2) einfiel.

8. Ein optischer Scanner nach Anspruch 1 oder 2, bei dem eines der ersten und zweiten holographischen Beugungsgitter (H2, H1) auf einer Oberfläche der Tragstruktur (10) gebildet worden ist durch Interferenz zwischen einem ersten Lichtstrahl, der eine sphärische Wellenfront aufwies und von einem Punkt bei einem Abstand (F) von der einen Oberfläche divergierte und schräg unter einem ersten Winkel (θ4) darauf einfiel, und einem zweiten Lichtstrahl, der so modifiziert worden war, daß er eine nicht ebene Wellenfront aufwies und welcher schräg auf die eine Oberfläche unter einem zweiten Winkel (θ1) einfiel, und das andere der ersten und zweiten holographischen Beugungsgitter (H2, H1) auf einer zweiten Oberfläche der Tragstruktur (10) gebildet worden ist durch Interferenz zwischen einem dritten Lichtstrahl, der eine sphärische Wellenfront aufwies und welcher zu einem Punkt bei dem Abstand (F) von der einen Oberfläche konvergierte und schräg auf die zweite Oberfläche unter dem ersten Winkel (θ4) einfiel, und einem vierten Lichtstrahl, der schräg auf die zweite Oberfläche unter einem dritten, von dem zweiten Winkel (θ1) verschiedenen Winkel (θ2) einfiel.

9. Ein optischer Scanner nach einem der vorhergehenden Ansprüche, bei dem die feste Platte (20) eine transparente Platte ist.

## Revendications

1. Scanner optique, comprenant un moyen pour diriger un faisceau laser (5) produit par le scanner pour qu'il soit incident en un point sur une surface de réception (4) qui est déplacée dans une direction de rotation prédéterminée pendant l'utilisation du scanner, lequel moyen comprend une structure de support (10) comportant des premier et second réseaux de diffraction holographiques (H2, H1) séparés l'un de l'autre pour que ledit faisceau laser (5) soit incident sur le premier réseau (H2), et diffracté par le premier réseau (H2) et soit par la suite incident sur le second réseau (H1), et diffracté par le second réseau (H1), ladite structure de support (10) étant mise en rotation pour obliger le point d'incidence du faisceau laser (5) à balayer à travers la surface de réception (4) dans une direction de balayage prédéterminée (M3), chacun des premier et second réseaux (H2, H1) étant tels qu'un rapport λ/d, où λ est la longueur d'ondes dudit faisceau laser (5) et d est la constante de diffraction du réseau de diffraction (H2, H1) concerné, est comprise dans l'intervalle 0,4 à 1,1, ledit faisceau laser (5) étant dirigé pour qu'il soit incident sur le premier réseau de diffraction (H2) à une position où la direction de polarisation du faisceau laser incident (5) reste substantiellement perpendiculaire à la direction de réseau lorsque la structure de support (10) tourne, et le scanner comprend, une plaque fixe (20) comportant un autre réseau de diffraction holographique, sur lequel le faisceau laser est incident après diffraction par ledit second réseau de diffraction (H1) et par lequel le faisceau laser est diffracté afin de converger sur ladite surface de réception (4) dans une direction perpendiculaire à ladite direction de rotation.

2. Scanner optique selon la revendication 1, dans lequel ladite structure de support comprend une plaque transparente ayant les premier et second réseaux de diffraction holographiques (H2, H1) respectivement formés sur les surfaces opposées de celle-ci.

3. Scanner optique, comprenant un moyen pour diriger un faisceau laser (5) produit par le scanner pour qu'il soit incident en un point sur une surface de réception (4) qui est déplacée dans une direction de rotation prédéterminée pendant l'utilisation du scanner, lequel moyen comprend une structure de support (10) comportant un premier réseau de diffraction holographique (H) et un miroir (M) séparés l'un de l'autre pour que ledit faisceau laser (5) soit incident sur le réseau de diffraction (H), et diffracté par le réseau (H) et soit par la suite incident sur le miroir (M), et soit de nouveau réfléchi ainsi sur le réseau (H) afin d'être diffracté ainsi une seconde fois, la structure de support (10) étant mise en rotation pour obliger le point d'incidence du faisceau laser (5) à balayer à travers la surface de réception (4) dans une direction de balayage prédéterminée (M3), le réseau (H) étant tel qu'un rapport λ/d, où λ est la longueur d'ondes dudit faisceau laser (5) et d est la constante de diffraction du réseau (H), est comprise dans l'intervalle 0,4 à 1,1, ledit faisceau laser (5) étant dirigé pour qu'il soit incident sur ledit réseau de diffraction (H) à un emplacement où la direction de polarisation du faisceau laser incident (5) reste substantiellement perpendiculaire à la direction de réseau lorsque la structure de support (10) tourne, et il y a dans le scanner une plaque fixe (20) comportant un autre réseau de diffraction holographique, sur lequel le faisceau laser est incident après la seconde diffraction par le premier réseau de diffraction (H) et par lequel le faisceau laser est diffracté afin de converger sur ladite surface de réception (4) dans une direction perpendiculaire à ladite direction de rotation.

4. Scanner optique selon la revendication 3, dans lequel ladite structure de support comprend une plaque transparente ayant ledit premier réseau de diffraction holographique (H) et ledit miroir (M) respectivement formés sur les surfaces opposées de celle-ci.

5. Scanner optique selon la revendication 1 ou 2, dans lequel un desdits premier et second réseaux de diffraction holographiques (H2, H1) a été formé sur une surface de ladite structure de support (10) par interférence entre un premier faisceau lumineux, ayant un front d'ondes plan et dirigé perpendiculairement sur ladite surface, et un second faisceau lumineux qui a été modifié pour qu'il ait un front d'ondes non-plan et qui était incident obliquement sur une dite surface selon un premier angle (θ1), et l'autre desdits premier et second réseaux de diffraction holographique (H2, H1) a été formé sur une seconde surface de ladite structure de support (10) par interférence entre un troisième faisceau lumineux, ayant un front d'ondes plan et dirigé perpendiculairement sur ladite seconde surface, et un quatrième faisceau lumineux qui a été modifié pour qu'il ait un front d'ondes non-plan et qui était incident obliquement sur ladite seconde surface selon un second angle (θ2), différent dudit premier angle (θ1).

6. Scanner optique selon la revendication 1 ou 2, dans lequel un desdits premier et second réseaux de diffraction holographiques (H2, H1) a été formé sur une surface de ladite structure de support (10) par interférence entre un premier faisceau lumineux, ayant un front d'ondes plan et incident obliquement sur ladite surface selon un premier angle (θ3), et un second faisceau lumineux qui était incident obliquement sur ladite surface selon un second angle (01) et qui a été modifié pour qu'il ait un front d'ondes non-plan, et l'autre desdits premier et second réseaux de diffraction holographique (H2, H1) a été formé sur une seconde surface de ladite structure de support (10) par interférence entre un troisième faisceau lumineux, ayant un front d'ondes plan et incident obliquement sur ladite seconde surface selon ledit premier angle (θ3), et un quatrième faisceau lumineux qui a été modifié pour qu'il ait un front d'ondes non-plan et qui était incident obliquement sur ladite seconde surface selon un troisième angle (θ2).

7. Scanner optique selon la revendication 1 ou 2, dans lequel un desdits premier et second réseaux de diffraction holographiques (H2, H1) a été formé sur une surface de ladite structure de support (10) par interférence entre un premier faisceau lumineux, ayant un front d'ondes plan et incident obliquement sur ladite surface selon un premier angle (θ3), et un second faisceau lumineux qui était incident obliquement sur ladite surface selon un second angle (θ1) et qui a été modifié pour qu'il ait un front d'ondes non-plan, et l'autre desdits premier et second réseaux de diffraction holographique (H2, H1) a été formé sur une seconde surface de ladite structure de support (10) par interférence entre un troisième faisceau lumineux ayant un front d'ondes plan et dirigé perpendiculairement sur ladite seconde surface, et un quatrième faisceau lumineux qui a été modifié pour qu'il ait un front d'ondes non-plan et qui était incident obliquement sur ladite seconde surface selon un troisième angle (θ2), différent dudit second angle (θ1).

8. Scanner optique selon la revendication 1 ou 2, dans lequel un desdits premier et second réseaux de diffraction holographique (H2, H1) a été formé sur une surface de ladite structure de support (10) par interférence entre un premier faisceau lumineux, qui avait un front d'ondes sphérique et qui divergeait à partir d'un point à une distance (F) de ladite surface et qui était incident obliquement sur celle-ci selon un premier angle (θ4), et un second faisceau lumineux qui a été modifié pour qu'il ait un front d'ondes non-plan et qui était incident obliquement sur ladite surface selon un second angle (θ1), et l'autre desdits premier et second réseaux de diffraction holographique (H2, H1) a été formé sur une seconde surface de ladite structure de support (10) par interférence entre un troisième faisceau lumineux, qui avait un front d'ondes sphérique et qui convergent vers un point à ladite distance (F) de ladite surface et qui était incident obliquement sur ladite seconde surface selon le premier angle (θ4), et un quatrième faisceau lumineux qui était incident obliquement sur ladite seconde surface selon un troisième angle (θ2), différent du second angle (θ1).

9. Scanner optique selon l'une quelconque des revendications précédentes, dans lequel ladite plaque fixe (20) est une plaque transparente.
